# EUROPÄISCHE PATENTSCHRIFT

(11) **EP 0 951 408 B1**
(45) Veröffentlichungstag und Bekanntmachung des Hinweises auf die Patenterteilung: **25.04.2001**
(21) Anmeldenummer: 98902946.7
(22) Anmeldetag: 07.01.1998
(51) Int. Cl.: B60R 13/08, F02B 77/11

(54) **VERFAHREN ZUR HERSTELLUNG EINES HITZESCHILDES UND EIN MIT DEM VERFAHREN HERGESTELLTES HITZESCHILD**
METHOD FOR PRODUCING A HEAT SHIELD AND HEAT SHIELD PRODUCED BY THIS METHOD
PROCEDE DE FABRICATION D'UN BOUCLIER THERMIQUE ET BOUCLIER THERMIQUE FABRIQUE SELON CE PROCEDE

(30) Priorität: 10.01.1997 DE 19700628
(43) Veröffentlichungstag der Anmeldung: 27.10.1999
(73) Patentinhaber: REINZ-DICHTUNGS-GMBH, 89233 Neu-Ulm (DE)
(72) Erfinder: BRETSCHNEIDER, Bernd, D-89335 Ichenhausen (DE); LEMKE, Kai-Uwe, D-89075 Ulm (DE); GRAFL, Dieter, D-89081 Ulm (DE)
(74) Vertreter: Pfenning, Meinig & Partner GbR
(86) Internationale Anmeldenummer: DE9800065
(87) Internationale Veröffentlichungsnummer: WO9830416

(56) Entgegenhaltungen:
- EP-A- 0 297 739
- EP-A- 0 486 427
- DE-A- 4 202 569
- DE-A- 4 211 409
- DE-C- 4 331 590
- DE-U- 8 709 034
- GB-A- 2 167 020

## Beschreibung

Die Erfindung betrifft ein Verfahren und ein mit dem Verfahren hergestelltes Hitzeschild nach dem Oberbegriff des Patentanspruches 1. Dabei soll das entsprechend hergestellte Hitzeschild insbesondere für den Einsatz in Kraftfahrzeugen geeignet sein und dort temperaturempfindliche Aggregate, Bauteile und Verbindungsleitungen in der Weise schützen, daß Wärmestrahlung nicht direkt auftreffen kann und außerdem das Hitzeschild als Isolation wirkt. Außerdem soll es günstige Lärmdämmeigenschaften haben.

Der Bedarf für den Einsatz von Hitzeschildern hat sich bei Kraftfahrzeugen stark vergrößert. Dies wird im wesentlichen dadurch hervorgerufen, daß der in den Motorräumen von Kraftfahrzeugen zur Verfügung stehende Raum maximal genutzt werden muß, um die für den Betrieb erforderlichen Aggregate, Bauelemente und Verbindungsleitungen unterzubringen, so daß diese sehr dicht angeordnet werden müssen. Dies führt dazu, daß wärmeempfindliche Komponenten sehr nahe an sehr heißen Bauteilen, wie z.B. der Abgasanlage, dem Verbrennungsmotor oder dem Wärmetauscher, angeordnet werden müssen. Die von diesen Elementen abgestrahlte Wärme kann die Funktion der wärmeempfindlichen Bauteile hervorrufen. Zu diesem Zwecke werden die wärmeempfindlichen Elemente bzw. Komponenten durch davor angeordnete Hitzeschilder vor der Wärmestrahlung und den hohen Temperaturen geschützt.

Aus DE 38 34 054 C2 ist ein entsprechend ausgebildetes Hitzeschild bekannt, bei dem zur Abschirmung von Wärmestrahlung mindestens zwei Flachmaterialien verwendet werden, die an mindestens zwei einander abgewandten Randbereichen miteinander verbunden sind. Die genannten Flachmaterialien sind so miteinander verbunden, daß zwischen ihnen ein Abstandsspalt ausgebildet wird. Außerdem ist es bei diesem bekannten Hitzeschild wichtig, daß das der Wärmestrahlungsquelle zugewandte Flachmaterial durch eine vorgegebene Profilierung oder Sickung oder entsprechende Materialauswahl in ihrer Ausdehnungscharakteristik so orientiert ist, daß sie in Richtung auf die Wärmequelle zu erfolgt. Durch eine entsprechende Ausbildung soll eine Anpassung an die auftretende Wärmebelastung ermöglicht werden, da sich bei höheren Temperaturen der Abstand der beiden verwendeten Flachmaterialien, die bevorzugt aus Blech bestehen sollen, vergrößert und ein vergrößerter Luftspalt entsteht, der selbstverständlich den Isolationseffekt verbessert.

Das in DE 38 34 054 C2 beschriebene Hitzeschild kann dann weiter in bezug auf die Isolationswirkung verbessert werden, wenn auf den Innenflächen der dort vorgeschlagenen Flachmaterialien zusätzlich eine Wärmedämmschicht aufgebracht wird. Als geeignete DämmMaterialien werden dabei organische oder anorganische Fasermaterialien, aber auch Metallgewebe, Gestricke oder Streckgitter vorgeschlagen, die auch die Schalldämmung verbessern sollen.

Das dort beschriebene Hitzeschild hat einen wesentlichen Nachteil darin, daß nicht jede beliebige Kontur des Hitzeschildes ausgebildet werden kann, um den gewünschten Effekt für die Anpassung an die verschiedenen Temperaturen erreichen zu können.

Außerdem ist die Isolationswirkung bei alleiniger Ausnutzung eines Luftspaltes ohne zusätzliche Wärmedämmstoffe begrenzt.

Werden dagegen, wie bereits ausgeführt, Wärmedämmschichten aufgebracht, so muß hierfür ein erhöhter Herstellungsaufwand in Kauf genommen werden. Für den Auftrag der Wärmedämmstoffe als Wärmedämmschicht sind Bindemittel erforderlich, die in der Regel organische Bestandteile aufweisen, die bei den hohen Temperaturen Probleme hervorrufen.

Des weiteren ist in DE 39 05 871 C2 ein Verbundmaterial zur Wärmeisolierung und Schalldämpfung für Abschirmteile und Hitzeschilder im Automobilbereich beschrieben. Dabei wird eine aus einem thermisch beständigen hochporösen anorganischen Material bestehende Isolationsschicht verwendet, die auf mindestens einer Seite mit einer stabilisierenden strukturfesten Hüllschicht, bevorzugt einer Metallfolie, umschlossen ist. Diese Hüllschicht umschließt die Isolationsschicht in einem Beispiel vollständig oder, für den Fall, daß das aus einer Isolationsschicht und der Hüllschicht gebildete Verbundmaterial auf der Oberfläche eines Abschirmteiles angeordnet ist, an der der Oberfläche des Abschirmteiles abgewandten Seite.

Für die Isolationsschicht werden verschiedene anorganische Materialien, die bevorzugt schäumbar sind (Wasserglas, aufgeschäumtes Glas, Glasbeton, aufgeschäumte keramische oder tonmineralische Materialien), und thermisch beständige armierende Fasern oder Blättchen (Glimmer oder Graphit) genannt. Die Isolationsschicht des dort beschriebenen Verbundmaterials sollte durch Aufschäumen eines geeigneten Materials hergestellt werden. Das aufgeschäumte Material wird im Anschluß daran mit der bereits erwähnten Hüllschicht umschlossen. Dabei hat es sich neben dem relativ hohen Herstellungsaufwand als nachteilig erwiesen, daß das aufgeschäumte Material nach seiner Aushärtung eine bestimmte Form aufweist, die nur geringfügig oder mit zusätzlichem Aufwand verändert werden kann. Dies führt zu Problemen und einem erhöhten technologischen Aufwand bei der Herstellung von Hitzeschildern, wenn hierfür kompliziertere Formen erforderlich sind.

Der DE 39 05 871 C2 ist zu entnehmen, daß dem eigentlichen Isolationsschichtmaterial thermisch beständige armierende Fasern oder Blättchen (Glimmer oder Graphit) zugegeben werden sollen, die insbesondere die mechanischen Eigenschaften verbessern sollen.

Ein weiterer Nachteil von entsprechend dieser Lehre hergestellten Hitzeschildern besteht darin, daß auf diese einwirkende größere Kräfte zu Verformungen, bis zum Bruch des Isolationsschichtmaterials führen können. Was zur Beeinträchtigung der eigentlichen Funktion und in Verbindung mit Schwingungen zu Lärm führen kann.

Außerdem muß gewährleistet sein, daß das in DE 39 05 871 C2 beschriebene Verbundmaterial von äußeren Hüllschichten umschlossen ist und eine Verbindung mit dem Abschirmteil gesichert sein muß, die verhindert, daß Schwingungen auftreten, die zu einer Lärmbelästigung führen können.

Ausgehend davon, ist es Aufgabe der Erfindung, ein Verfahren und ein mit dem Verfahren hergestelltes Hitzeschild vorzuschlagen, wobei das Verfahren einfach und kostengünstig durchführbar sein soll, und das damit hergestellte Hitzeschild unter Berücksichtigung jeglicher toxischer und ökologischer Gesichtspunkte unbedenklich ist.

Erfindungsgemäß wird diese Aufgabe mit den Merkmalen des Patentanspruchs 1 für das Verfahren und mit den Merkmalen des Anspruchs 21 für das mit dem Verfahren hergestellte Hitzeschild gelöst. Vorteilhafte Ausgestaltungsformen und Weiterbildungen der Erfindung ergeben sich unter Nutzung der in den untergeordneten Ansprüchen genannten Merkmale.

Für die Herstellung eines Hitzeschildes nach der Erfindung wird pulver- und/oder blättchenförmiges Isoliermaterial verwendet. Dieses Isoliermaterial wird auf einer Platte, die zumindest aus einem teilweise plastisch verformbaren Material besteht, lose aufgebracht. Dabei kann nur ein Teil der Fläche vom Isoliermaterial überdeckt sein. Insbesondere sollten die Randbereiche oder Bereiche für Durchbrechungen (Schraubendurchgänge) der Platte freigehalten werden.

Als ganz besonders geeignet hat sich Vermiculit, ein Abbauprodukt des Glimmers, als Isoliermaterial herausgestellt. Es kann aber auch Glimmer an sich, expandiertes Graphit oder Perlit verwendet werden. Es ist ebenfalls möglich dem Isoliermaterial Füllstoffe wie zum Beispiel Sand zuzugeben.

Im Anschluß an das Aufrieseln wird dann eine zweite Platte mit einem Preßwerkzeug oder ein Preßwerkzeug allein in Richtung auf die berieselte Oberfläche der ersten Platte zu bewegt und dabei das in loser Schüttung auf der ersten Platte aufgerieselte Isoliermaterial falls erforderlich verteilt, und nachdem eine ausreichende Druckkraft mittels der beiden Platten oder des Preßwerkzeuges mit einem oder mehreren Preßvorgängen auf das Isoliermaterial aufgebracht und eine Verfestigung des Isoliermaterials zumindest bereichsweise erreicht worden ist, werden die beiden Platten in ihren Randbereichen miteinander verbunden. Es kann auch so vorgegangen werden, daß das Verpressen des Isoliermaterials nach dem Zuführen der 2 Platten in Richtung der 1. Platte kurz vor dem Verbinden in den Randbereichen erfolgt, also die Verfestigung ein separater Schritt ist. Dabei ist es zwangsläufig nicht erforderlich, daß der Rand vollständig verschlossen wird. Für die Verbindung der beiden Platten miteinander kommen geeignete formschlüssige und/oder kraftschlüssige Verbindungen infrage. Es hat sich aber gezeigt, daß ein Umbördeln der Ränder an zumindest zwei sich gegenüberliegenden Seiten der miteinander zu verbindenden Platten ausreichend ist. Ein sicherer Einschluß des Isoliermaterials zwischen den beiden Platten ist aber bei einer allseitigen Umbördelung der Ränder gegeben.

Das erfindungsgemäße Verfahren kann aber auch so durchgeführt werden, daß nach dem losen Aufbringen von Isoliermaterial auf der ersten Platte, beispielsweise mit einem Preßwerkzeug, das Isoliermaterial verfestigt und im Anschluß daran gezielt vorgebbare Bereiche mit zusätzlichem Isoliermaterial in loser Form versehen werden können, die dann wiederum unter Druckeinwirkung, die einmal mit einem zweiten Preßwerkzeug, das entsprechend konturiert sein kann, oder mit der zweiten Platte verfestigt werden. Dadurch können Bereiche des Hitzeschildes gezielt so hergestellt werden, daß diese einmal eine höhere Verfestigung und zum anderen auch eine höhere Dicke aufweisen, so daß gezielt Einfluß auf die gewünschten Eigenschaften, auch unter Berücksichtigung der Lärmdämmung genommen werden kann.

Die Verfahrensführung kann sehr einfach durchgeführt werden, so ist es möglich, das Isoliermaterial mit einer geeigneten Förder- oder Zuführeinrichtung nahezu gleichmäßig auf der 1. Platte zu verteilen. Als Zuführeinrichtungen können z.B. Vorratsbehälter in Form von Trichtern mit einer Öffnung dienen. Aus diesem Trichter kann dann das Isoliermaterial auf ein Förderband aufgebracht werden, von dem es dann auf die 1. Platte geführt wird. Auch ein Aufbringen aus dem Trichter über zwei gegenlaufende Walzen ist möglich. Es können an geeigneten Stellen auch Rackel angeordnet sein. Eine zweite Variante besteht darin, daß das verwendende Isoliermaterial so aufgerieselt wird, daß sich ein Schüttkegel ausbildet, der dann ausgehend von der Spitze des Schüttkegels mit der zweiten Platte oder einem Preßwerkzeug zusammengepreßt und dabei das Isoliermaterial verteilt wird.

Der Ort der Schüttkegelausbildung kann dann so ausgewählt sein, daß sich eine optimale Verteilung des Isoliermaterials zwischen den beiden plattenförmigen Gebilden ergibt. Normalerweise wird dies der Flächenschwerpunkt der Platte sein, auf der das Isoliermaterial aufgerieselt wird. Die Anordnung des Schüttkegels auf der Platte kann aber auch auf gegebenenfalls erforderliche Bedingungen, wie die letztendlich herzustellende Form des Hitzeschildes oder unter Berücksichtigung eines besonderen Bereiches, der eine erhöhte Isolierwirkung aufweisen muß, ausgerichtet sein.

Bei der Verteilung des pulver- bzw. blättchenförmigen Isoliermaterials ist es günstig, daß hierbei kein Bindemittel zugesetzt werden muß und sich die einzelnen Körner oder Blättchen nahezu ungehindert verteilen lassen. Die Vermeidung eines Bindemittels hat weiter den Vorteil, daß keine ökologischen und toxischen Aspekte bei der Herstellung und Verwendung der erfindungsgemäß hergestellten Hitzeschilder zu berücksichtigen sind und es auch bei der Entsorgung keine Probleme gibt.

Vor dem Aufrieseln des Isoliermaterials kann die erste Platte zumindest teilweise wannenförmig verformt werden, um zu verhindern, daß aufgerieseltes Isoliermaterial verloren geht. Die Verformung wird vorzugsweise an den Rändern vorgenommen und kann nachfolgend bei der eigentlichen Verbindung der beiden Platten, zwischen denen das Isoliermaterial aufzunehmen ist, ausgenutzt werden.

Verluste von Isoliermaterial nach dem Aufrieseln können außerdem verhindert, zumindest jedoch vermindert werden, wenn vor dem Aufrieseln des Isoliermaterials die Fläche auf der ersten Platte, die die Basis für den Schüttkegel bildet, mit einem anorganischen Bindemittel, vorzugsweise Wasserglas, versehen wird, das physiologisch und ökologisch unbedenklich ist.

Außerdem kann gezielt Einfluß auf die Verteilung des Isoliermaterials zwischen den beiden Platten genommen werden, indem Ausbuchtungen eingearbeitet sind, in die ein größeres Volumen an Isoliermaterial aufgenommen werden kann und folglich dort das Isolationsvermögen des Hitzeschildes lokal vergrößert wird, was für bestimmte Einsatzzwecke günstig sein kann. Eine weitere Möglichkeit zur Beeinflussung der Verteilung des Isoliermaterials in bestimmte Bereiche des Hitzeschildes kann aber auch dadurch erreicht werden, daß Sicken und/oder Stege zumindest einer beiden Platten oder einem Preßwerkzeug vorhanden sind, die zum einen mehr Isoliermaterial aufnehmen können oder zum anderen die Stege so ausgebildet sind, daß Isoliermaterial nach dem Aufrieseln gezielt aus bestimmten Bereichen verdrängt wird oder bestimmte Bereiche (z.B. Bereiche von Schraubendurchgangsöffnungen) stärker verfestigt werden.

Erfindungsgemäß kann aber auch so gearbeitet werden, daß nach dem losen Aufbringen des Isoliermaterials die Verfestigung mit einem mit Aussparungen bzw. Durchbrechungen versehenen Preßwerkzeug bzw. einem abgesetzten Preßwerkzeug durchgeführt wird, so daß nicht verfestigte Bereiche ausgebildet werden, aus denen das lose Isoliermaterial nachträglich entfernt werden kann. Diese Bereiche sollten bevorzugt dort ausgebildet werden, wo für die Befestigung des Hitzeschildes beispielsweise Schraubendurchgangsöffnungen vorgesehen sind. Die Entfernung des nicht verfestigten Isoliermaterials kann dabei in einfacher Form durch Wegblasen oder Absaugen erfolgen.

Eine andere Möglichkeit für die Ausbildung von Bereichen, die von Isoliermaterial freizuhalten sind, besteht darin, daß vor dem losen Aufbringen des Isoliermaterials bestimmte ebenfalls vorgebbare Bereiche auf der ersten Platte elektrostatisch aufgeladen und nach dem Aufbringen des Isolationsmaterials dieses aus den nicht aufgeladenen Bereichen entfernt wird. Im Anschluß an die Entfernung des unerwünschten Isolationsmaterials kann das gehaltene Isolationsmaterial dann, wie bereits beschrieben, verfestigt und im Anschluß daran mit der zweiten Platte abgedeckt werden.

Im Gegensatz dazu besteht aber auch die Möglichkeit, Isolationsmaterial lose auf die erste Platte aufzubringen und mit einem bereichsweise elektrostatisch aufgeladenen Werkzeug dort wieder zu entfernen. Dafür kann ein plattenförmiges aber auch ein trommelförmiges Element an den Oberflächen entsprechend bereichsweise elektrostatisch aufgeladen werden.

Im Anschluß daran, kann dann das verbliebene Isolationsmaterial, wie bereits beschrieben, verfestigt werden.

Günstig ist es, insbesondere Randbereiche, Bereiche mit engen Radien so zu gestalten, daß zumindest die Menge an Isolationsmaterial in diesen Bereichen vermindert wird.

Da das Hitzeschild nach der Verbindung der beiden Platten kein starrer Körper ist und die Platten in der Regel vorteilhaft auch aus einem Metall bestehen, kann eine zusätzliche dreidimensionale Verformung ohne weiteres vorgenommen werden und dadurch die letztendlich gewünschte Kontur, die den geforderten Einbauverhältnissen im Motorraum eines Kraftfahrzeuges optimal angepaßt ist, erreicht werden. Bei dieser Verformung treten durch das eingeschlossene Isoliermaterial keine Probleme auf, da keine bzw. geringe Bindungskräfte zwischen den einzelnen Körnern oder Blättchen aufgebrochen werden müssen und diese nur geringfügig behindert bei der Verformung aneinander vorbeigleiten und die neue Form erreicht werden kann.

Der Verzicht auf ein Bindemittel hat auch weiterhin den Vorteil, daß sich insbesondere die Schalldämmeigenschaften des Hitzeschildes verbessern, da die Schallwellenenergie mit Hilfe des pulver- bzw. blättchenförmigen Glimmers sehr gut abgebaut werden kann und auch eine Langzeitbeeinträchtigung nicht erfolgt. Selbstverständlich gibt es auch keine Resonanzprobleme, die zu einer erhöhten Lärmbeeinträchtigung führen könnten.

Vorteilhaft kann es aber auch sein, wenn zumindest eine der beiden Platten an der Oberfläche, die in direkten Kontakt mit dem Isoliermaterial kommt, eine erhöhte Oberflächenrauhigkeit aufweist, da sich dies positiv bei der Verteilung des Isoliermaterials während der Bewegung der zweiten Platte auf die erste Platte günstig auswirkt und eine erhöhte Haftung des Isoliermaterials nach dem Aufrieseln einem unerwünschten Herunterfallen von Isoliermaterial entgegenwirkt.

Zur Verbesserung der Wirkung des Hitzeschildes ist es außerdem günstig, wenn zumindest eine der Platten mit einer mindestens einseitig aufgebrachten Wärmestrahlung reflektierenden Beschichtung verwendet wird. Diese sollte bevorzugt in Richtung auf die Wärmequelle ausgerichtet sein.

Für die Ableitung von Wärme wirkt es sich günstig aus, wenn die Platte, die an der der Wärmequelle abgewandten Seite angeordnet ist, dicker, mit Rippen versehen ausgebildet ist und/oder aus einem Material mit guter Wärmeleitfähigkeit besteht, so daß die aufgenommene Wärme gut abgeführt werden kann.

Nachfolgend soll die Erfindung anhand von Ausführungsbeispielen näher beschrieben werden.
Dabei zeigen:
- Fig. 1:: Eine auf eine Platte aufgerieselte Menge an Isoliermaterial;
- Fig. 2:: eine Schnittdarstellung eines erfindungsgemäß hergestellten Ausführungsbeispiels eines Hitzeschildes;
- Fig. 3:: eine Vorderansicht einer Platte für ein Ausführungsbeispiel eines erfindungsgemäßen Hitzeschildes und eine zweite Platte, die mit der ersten Platte zu einem Hitzeschild verbindbar ist und
- Fig. 4:: ein weiteres Ausführungsbeispiel im Teilschnitt.

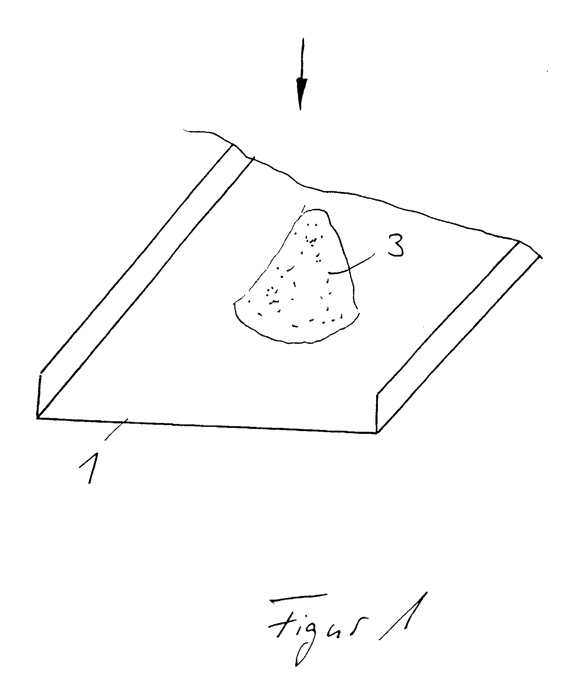

In der Fig. 1 ist gezeigt, wie eine erste Platte 1 mit Isoliermaterial (pulver- und/oder blättchenförmiger Glimmer) auf einem Teil einer nahezu eben ausgebildeten Fläche berieselt worden ist. Dabei erfolgte bei diesem Beispiel die Berieselung mit dem Isoliermaterial 3 schüttkegelförmig, diese Berieselung kann aber auch in etwas großflächiger Form erfolgen. Die Rand- oder andere Bereiche der Platte 1 sollten bevorzugt gezielt nicht berieselt oder nachfolgend von Isolationsmaterial 3 befreit werden.

Bei dem in dieser Figur dargestellten Beispiel sind die Ränder der Platte 1 nach oben gebogen, um zumindest ein seitliches Herunterfallen von Isoliermaterial 3 zu vermeiden. Es besteht aber auch die Möglichkeit, die in dieser Figur nicht dargestellt worden ist, auch die stirnseitigen Ränder der Platte 1 zu verbiegen und eine vollständige Wannenform vorzugeben.

Der in der Fig. 1 dargestellte Pfeil zeigt die Richtung an, mit der eine zweite, nicht dargestellte Platte 2, in Richtung auf die erste Platte 1 gepreßt wird. Dabei wird die Schüttung des Isoliermaterials 3 mit der Bewegung der nicht dargestellten Platte 2 relativ gleichmäßig verteilt und in bevorzugter Form sollten die Anpreßkraft und die Menge (insbesondere das Volumen) des aufgerieselten Isoliermaterials so aufeinander abgestimmt sein, daß nach der Herstellung der Verbindung der beiden Platten das Isoliermaterial 3 den Raum zwischen der ersten Platte 1 und der zweiten Platte 2 vollständig ausfüllt.

Der in der Fig. 2 gezeigte Schnitt durch ein Beispiel eines erfindungsgemäß ausgebildeten Hitzeschildes zeigt dann, wie die Ränder der ersten Platte 1 die stirnseitigen Ränder der zweiten Platte 2 umbördeln und so die Verbindung der beiden Platten 1 und 2 hergestellt werden kann. Der umbördelte Bereich ist dann für die Montage des fertigen Hitzeschildes und den Angriff geeigneter Befestigungselemente geeignet.

Bei dem in Fig. 2 gezeigten Beispiel erfolgt die Verformung der ersten Platte 1 ausschließlich zur Verbindung mit der zweiten Platte 2 und die zweite Platte 2 wird während des Anpressens gegen die erste Platte 1 infolge der begrenzten Inkompressibilität des Isoliermaterials 3 verformt. Dies kann durch geeignete Konturierung des Preßwerkzeuges in Verbindung mit der bereits erwähnten optimierten Bemessung des Volumens des zu verwendenden Isoliermaterials erreicht werden. Selbstverständlich kann aber auch die erste Platte 1 entsprechend mitverformt werden, wenn sie in einem entsprechend konturierten Gesenk angeordnet wird.

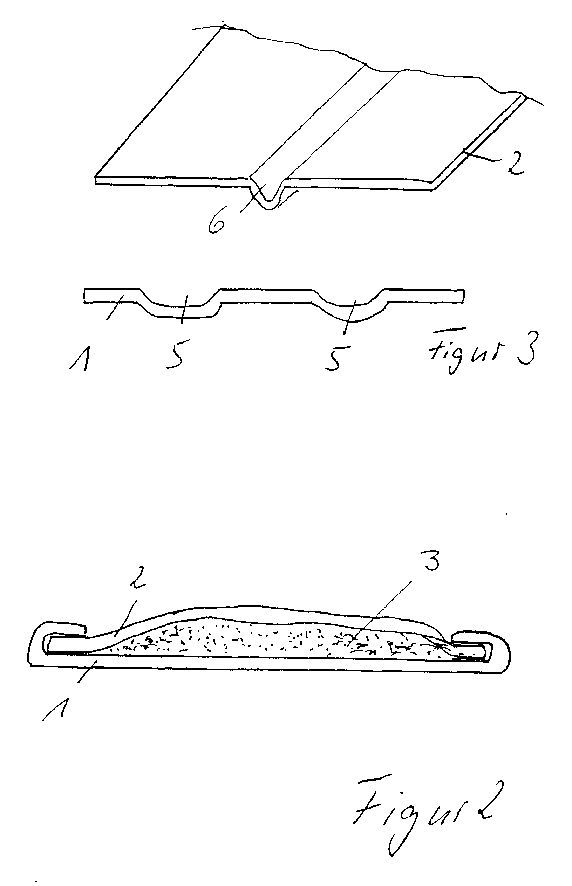

In der Fig. 3 sind zwei mögliche Ausführungsformen für die erste Platte 1 und die zweite Platte 2 dargestellt.

Dabei ist die erste Platte 1 mit Ausbuchtungen 5 versehen, die lokal so angeordnet sind, daß bestimmte Bereiche, in denen die thermische Belastung besonders verringert werden muß, berücksichtigt werden können. Bei der erfindungsgemäßen Herstellung eines solchen Hitzeschildes wird dann in die Ausbuchtungen 5 eine größere Menge an Isoliermaterial 3 verteilt und demzufolge erhöht sich dort die Isolierwirkung des Hitzeschildes.

Die zweite Platte 2, die in der Fig. 3 dargestellt ist, ist mit einer Sicke 6 versehen, die bei der Herstellung des erfindungsgemäßen Hitzeschildes ebenfalls gezielt Einfluß auf die Verteilung des aufgerieselten Isoliermaterials 3 nehmen kann, da Isoliermaterial 3 im Bereich der Sicke 6 verdrängt wird. Anstelle der Sicke 6 kann aber auch ein Steg verwendet werden.

Die Ausbildungen der Ausbuchtungen 5 oder die von einer oder mehreren Sicken 6 haben weiterhin den Vorteil, daß zusätzlich die Stabilität des Hitzeschildes erhöht werden kann.

Die in der Fig. 3 gezeigten ersten und zweiten Platten 1 und 2 können sowohl einzeln als auch gemeinsam zur Herstellung eines Hitzeschildes nach der Erfindung verwendet werden, wobei die Ausführungen dann nicht auf die dargestellte Ausbildung und Anordnung begrenzt sein müssen, sondern auch beispielsweise eine Überkreuz-Anordnung mehrerer Sicken bzw. Stege Verwendung finden kann.

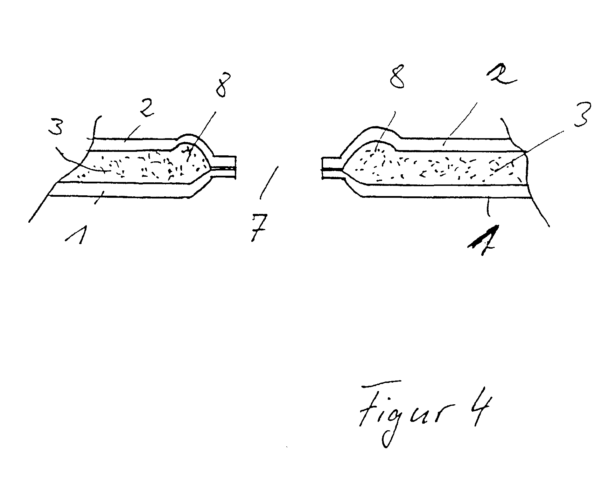

Die Fig. 4 zeigt ein weiteres Ausführungsbeispiel eines erfindungsgemäß ausgebildeten Hitzeschildes im Teilschnitt, bei dem insbesondere der Teil gezeigt ist, in dem eine Schraubendurchgangsöffnung 7 ausgebildet worden ist.

Dabei wird bei der Herstellung dieses Hitzeschildes so vorgegangen, daß der Bereich der Schraubendurchgangsöffnung 7 beim Aufbringen des Isoliermaterials 3 freigelassen wird oder dieser Bereich, wie bereits in der Beschreibung näher bezeichnet, nach dem Auftragen von Isoliermaterial 3 befreit wird. Im Anschluß daran erfolgt eine Verfestigung des Isoliermaterials mit einem Preßwerkzeug in mindestens einem Arbeitsgang und nach dieser ersten Verfestigung wird bei diesem Beispiel kreisförmig rundum die Schraubendurchgangsöffnung 7 erneut Isoliermaterial aufgebracht und im Anschluß daran die zweite Platte 2 mit einem entsprechend konturierten Preß- und Stanzwerkzeug gegen das Isoliermaterial 3 in Richtung auf die erste Platte 1 gepreßt. Dabei wird insbesondere das im Bereich 8 nachträglich aufgebrachte Isoliermaterial 3 verfestigt und die beiden Platten 1 und 2 entsprechend verformt, wobei hierfür die erste Platte 1 günstigerweise auf einem entsprechend ausgebildeten Gesenk angeordnet wird. Das zu verwendende Preßwerkzeug stanzt dabei im gleichen Arbeitsgang die eigentliche Schraubendurchgangsöffnung 7 im Hitzeschild aus und es ist dadurch möglich, mit relativ geringem Herstellungsaufwand eine sehr vorteilhafte Ausgestaltung eines erfindungsgemäßen Hitzeschildes, bei dem für die Befestigung oder für andere Zwecke eine Durchgangsöffnung 7 vorhanden sein muß, zu fertigen. Die Materialanhäufung im Bereich 8 bewirkt dabei eine wesentlich bessere Wärme- und Schalldämmung in diesem besonders kritischen Bereich.

## Patentansprüche

1. Verfahren zur Herstellung eines Hitzeschildes zur Verwendung in Kraftfahrzeugen, bestehend aus einem Isoliermaterial, das zwischen zwei zumindest teilweise plastisch verformbaren Platten aufgenommen ist,
dadurch **gekennzeichnet ,**
daß pulver- und/oder blättchenförmiges Isoliermaterial (3) auf eine der beiden Platten (1, 2) diese zumindest teilweise überdeckend lose aufgebracht,
unter Druckeinwirkung zumindest bereichsweise verfestigt
und die zweite Platte (2) in oberhalb des Isoliermaterials (3) liegender Position mit der ersten Platte (1) durch eine form- und/oder kraftschlüssige Verbindung der Platten (1, 2) in deren Randbereichen verbunden wird.

2. Verfahren nach Anspruch 1 oder 2,
dadurch gekennzeichnet, daß als Isoliermaterial Glimmer, expandiertes Graphit, Perlit oder ein Glimmerabbauprodukt wie Vermiculit verwendet wird.

3. Verfahren nach Anspruch 2,
dadurch gekennzeichnet, daß das Isoliermaterial Füllstoffe wie Sand enthält.

4. Verfahren nach mindestens einem der Ansprüche 1 bis 3,
dadurch gekennzeichnet, daß die Verfestigung des Isoliermaterials (3) durch Bewegung der zweiten Platte (2) in Richtung auf die erste Platte (1) erreicht wird.

5. Verfahren nach mindestens einem der Ansprüche 1 bis 4,
dadurch gekennzeichnet, daß die Verfestigung des Isoliermaterials (3) mit einem Preßwerkzeug mit mindestens einer Pressung durchgeführt wird.

6. Verfahren nach Anspruch 5,
dadurch gekennzeichnet, daß mit einem abgesetzten Preßwerkzeug gearbeitet wird.

7. Verfahren nach einem der Ansprüche 1 bis 6,
dadurch gekennzeichnet, daß nachfolgend an die erste Verfestigung eine weitere Menge an Isoliermaterial (3) vollständig oder in lokal begrenzten Bereichen auf der Oberfläche der ersten Platte (1) lose aufgebracht und anschließend unter Druckeinwirkung verfestigt wird.

8. Verfahren nach einem der Ansprüche 1 bis 7,
dadurch gekennzeichnet, daß die Verfestigung des Isoliermaterials (3) mittels eines mit Aussparungen versehenen Preßwerkzeuges bereichsweise durchgeführt und/oder nachfolgend das in den nicht verfestigten Bereichen aufgebrachte Isoliermaterial (3) entfernt wird.

9. Verfahren nach einem der Ansprüche 1 bis 8,
dadurch gekennzeichnet, daß das nicht verfestigte Isoliermaterial weggeblasen oder abgesaugt oder elektrostatisch entfernt wird.

10. Verfahren nach einem der Ansprüche 1 bis 9,
dadurch gekennzeichnet, daß das Isoliermaterial 3 zumindest beim 1. Auftrag über geeignete Förder- und Zuführeinrichtung nahezu gleichmäßig auf der ersten Platte (1) aufgebracht wird.

11. Verfahren nach einem der Ansprüche 1 bis 10,
dadurch gekennzeichnet, daß das Isoliermaterial (3) schüttkegelförmig aufgerieselt und mit der zweiten Platte (2) oder dem Preßwerkzeug, ausgehend von der Spitze des Schüttkegels (4), bei der Bewegung der zweiten Platte (2) auf die erste Platte (1) zu das Isoliermaterial (3) verdrängend verteilt wird.

12. Verfahren nach einem der Ansprüche 1 bis 11,
dadurch gekennzeichnet, daß der Schüttkegel (4) im Bereich des Flächenschwerpunktes der ersten Platte (1) ausgebildet wird.

13. Verfahren nach einem der Ansprüche 1 bis 12,
dadurch gekennzeichnet, daß die erste Platte (1) vor dem Aufrieseln des Isoliermaterials (3) zumindest teilweise wannenförmig verformt wird.

14. Verfahren nach einem der Ansprüche 1 bis 13,
dadurch gekennzeichnet, daß die Fläche der ersten Platte (1), die die Basis des Schüttkegels (4) bildet, mit einem anorganischen Bindemittel vor dem Aufrieseln versehen wird.

15. Verfahren nach einem der Ansprüche 1 bis 14,
dadurch gekennzeichnet, daß die Verteilung und/oder Verfestigung des Isoliermaterials (3) durch Ausbuchtungen (5), Sicken (6) und/oder Stege in/an zumindest einer der beiden Platten (1, 2) oder eines für die Verfestigung verwendeten Preßwerkzeuges gezielt beeinflußt wird.

16. Verfahren nach einem der Ansprüche 1 bis 15,
dadurch gekennzeichnet, daß die zweite Platte (2) durch zumindest teilweises Umbördeln am Rand mit der ersten Platte (1) verbunden wird.

17. Verfahren nach einem der Ansprüche 1 bis 16,
dadurch gekennzeichnet, daß die Anpreßkraft der zweiten Platte (2) oder des Preßwerkzeuges gegen die erste Platte (1) und das Isoliermaterial (3) mit der Menge des Isoliermaterials (3) so aufeinander abgestimmt wird, daß der Raum zwischen den beiden Platten (1, 2) mit Isoliermaterial vollständig ausgefüllt wird.

18. Verfahren nach einem der Ansprüche 1 bis 17,
dadurch gekennzeichnet, daß das Hitzeschild nach der Verbindung der beiden Platten (1, 2) dreidimensional verformt wird.

19. Verfahren nach Anspruch 1,
dadurch gekennzeichnet, daß vorgebbare Bereiche der ersten Platte (1) vor dem losen Aufbringen des Isoliermaterials (3) elektrostatisch aufgeladen werden und das Isoliermaterial (3) vor dem Verfestigen in den nicht aufgeladenen Bereichen entfernt wird.

20. Verfahren nach Anspruch 1,
dadurch gekennzeichnet, daß nach dem losen Aufbringen des Isoliermaterials (3), Isoliermaterial vor der Verfestigung mit einem bereichsweise elektrostatisch aufgeladenen Werkzeug von der ersten Platte (1) entfernt wird.

21. Hitzeschild, hergestellt mit einem Verfahren nach mindestens einem der Ansprüche 1 bis 20,
dadurch **gekennzeichnet ,**
daß pulver- und/oder blättchenförmiger Glimmer als Isolationsmaterial (3) zwischen zwei formund/oder kraftschlüssig miteinander verbundenen Platten (1, 2) aus zumindest teilweise plastisch verformbarem Material aufgenommen ist.

22. Hitzeschild nach Anspruch 21,
dadurch gekennzeichnet, daß zumindest eine der beiden Platten (1, 2) ein Metall ist.

23. Hitzeschild nach Anspruch 21 oder 22,
dadurch gekennzeichnet, daß zumindest eine der Platten (1, 2) mit Ausbuchtungen (5), Sicken (6) und/oder Stegen versehen ist.

24. Hitzeschild nach einem der Ansprüche 21 bis 23,
dadurch gekennzeichnet, daß die mit dem Isoliermaterial (3) in Kontakt stehende Oberfläche von zumindest einer der beiden Platten (1, 2) eine erhöhte Oberflächenrauhigkeit aufweist.

25. Hitzeschild nach einem der Ansprüche 21 bis 24,
dadurch gekennzeichnet, daß zumindest eine der beiden Platten (1, 2) mindestens einseitig mit einer Wärmestrahlung reflektierenden Beschichtung versehen ist.

26. Hitzeschild nach einem der Ansprüche 21 bis 25,
dadurch gekennzeichnet, daß die an der Wärmestrahlung abgewandten Seite des Hitzeschildes angeordnete Platte (1, 2) dicker, mit Rippen versehen ausgebildet ist und/oder aus einem Material mit guter Wärmeleitfähigkeit besteht.

27. Hitzeschild nach einem der Ansprüche 21 bis 26,
dadurch gekennzeichnet, daß die Dicke und/oder Verfestigung des zwischen den Platten (1, 2) aufgenommenen Isoliermaterials (3) lokal variiert.

28. Hitzeschild nach einem der Ansprüche 21 bis 27,
dadurch gekennzeichnet, daß vorgebbare Bereiche von Isoliermaterial (3) freigehalten sind.

## Claims

1. Method of producing a heat shield for use in motor vehicles, consisting of an insulating material which is accommodated between two at least partly plastically deformable plates, characterized in that powdery and/or flaky insulating material (3) is loosely applied to one of the two plates (1, 2) in such a way as to at least partly cover the same, and is consolidated at least in regions under the effect of pressure, and the second plate (2), in a position lying above the insulating material (3), is connected to the first plate (1) by a positive-locking and/or frictional connection of the plates (1, 2) in the marginal regions of the latter.

2. Method according to Claim 1 or 2, characterized in that the insulating material used is mica, expanded graphite, perlite or a mica decomposition product such as vermiculite.

3. Method according to Claim 2, characterized in that the insulating material contains filling material such as sand.

4. Method according to at least one of Claims 1 to 3, characterized in that the consolidation of the insulating material (3) is achieved by movement of the second plate (2) in the direction of the first plate (1) .

5. Method according to at least one of Claims 1 to 4, characterized in that the consolidation of the insulating material (3) is carried out with a pressing tool with at least one pressing operation.

6. Method according to Claim 5, characterized in that work is carried out with a stepped pressing tool.

7. Method according to one of Claims 1 to 6, characterized in that, following the first consolidation, a further quantity of insulating material (3) is loosely applied to the entire surface or to locally restricted regions of the surface of the first plate (1) and is then consolidated under the effect of pressure.

8. Method according to one of Claims 1 to 7, characterized in that the consolidation of the insulating material (3) is carried out in regions by means of a pressing tool provided with recesses and/or the insulating material (3) applied in the non-consolidated regions is subsequently removed.

9. Method according to one of Claims 1 to 8, characterized in that the non-consolidated insulating material is blown away or sucked off or removed electrostatically.

10. Method according to one of Claims 1 to 9, characterized in that the insulating material (3), at least during the 1st application, is applied virtually uniformly to the first plate (1) via a suitable conveying and feeding device.

11. Method according to one of Claims 1 to 10, characterized in that the insulating material (3) is sprinkled on in the shape of a heaped cone and, starting from the apex of the heaped cone (4), is distributed with the second plate (2) or the pressing tool during the movement of the second plate (2) towards the first plate (1) in such a way as to displace the insulating material (3).

12. Method according to one of Claims 1 to 11, characterized in that the heaped cone (4) is formed in the region of the area centre of gravity of the first plate (1).

13. Method according to one of Claims 1 to 12, characterized in that the first plate (1) is formed at least partly into a trough shape before the insulating material (3) is sprinkled on.

14. Method according to one of Claims 1 to 13, characterized in that the surface of the first plate (1) which forms the base of the heaped cone (4) is provided with an inorganic binding agent before the insulating material is sprinkled on.

15. Method according to one of Claims 1 to 14, characterized in that the distribution and/or consolidation of the insulating material (3) is specifically influenced by bulges (5), beads (6) and/or webs in/on at least one of the two plates (1, 2) or a pressing tool used for the consolidation.

16. Method according to one of Claims 1 to 15, characterized in that the second plate (2) is connected to the first plate (1) by at least partial flanging at the margin.

17. Method according to one of Claims 1 to 16, characterized in that the pressure force of the second plate (2) or of the pressing tool against the first plate (1) and the insulating material (3) is matched to the quantity of the insulating material (3) in such a way that the space between the two plates (1, 2) is completely filled with insulating material.

18. Method according to one of Claims 1 to 17, characterized in that the heat shield is shaped three-dimensionally after the two plates (1, 2) have been connected.

19. Method according to Claim 1, characterized in that predeterminable regions of the first plate (1) are electrostatically charged before the loose application of the insulating material (3), and the insulating material (3) is removed before the consolidation in the regions which are not charged.

20. Method according to Claim 1, characterized in that, after the loose application of the insulating material (3), insulating material is removed from the first plate (1) before the consolidation with a tool which is electrostatically charged in regions.

21. Heat shield, produced by a method according to at least one of Claims 1 to 20, characterized in that powdery and/or flaky mica is accommodated as insulating material (3) between two plates (1, 2) connected to one another in a positive-locking and/or frictional manner and made of at least partly plastically deformable material.

22. Heat shield according to Claim 21, characterized in that at least one of the two plates (1, 2) is a metal.

23. Heat shield according to Claim 21 or 22, characterized in that at least one of the plates (1, 2) is provided with bulges (5), beads (6) and/or webs.

24. Heat shield according to one of Claims 21 to 23, characterized in that that surface of at least one of the two plates (1, 2) which is in contact with the insulating material (3) has increased surface roughness.

25. Heat shield according to one of Claims 21 to 24, characterized in that at least one of the two plates (1, 2) is provided at least on one side with a coating reflecting thermal radiation.

26. Heat shield according to one of Claims 21 to 25, characterized in that the plate (1, 2) arranged on that side of the heat shield which is remote from thermal radiation is of a thicker design provided with ribs and/or is made of a material having good thermal conductivity.

27. Heat shield according to one of Claims 21 to 26, characterized in that the thickness and/or consolidation of the insulating material (3) accommodated between the plates (1, 2) is varied locally.

28. Heat shield according to one of Claims 21 to 27, characterized in that predeterminable regions are kept free of insulating material (3).

## Revendications

1. Procédé de fabrication d'un bouclier thermique pour utilisation dans des véhicules automobiles, constitué d'un matériau isolant, qui est reçu entre deux plaques à déformation au moins partiellement plastique, caractérisé en ce que:
un matériau isolant en poudre et/ou en lamelles est déposé librement sur l'une des deux plaques (1, 2) de manière à recouvrir celle-ci au moins en partie, et consolidé au moins par endroits sous l'influence d'une pression, et
la seconde plaque (2), en position au-dessus du matériau isolant (3), est reliée à la première plaque (1) par une liaison à engagement positif et/ou à adhérence des plaques (1, 2) dans leurs zones de bord.

2. Procédé selon la revendication 1 ou 2, caractérisé en ce qu'on utilise comme matériau isolant du mica, du graphite expansé, de la perlite ou un produit de décomposition du mica comme la vermiculite.

3. Procédé selon la revendication 2, caractérisé en ce que le matériau isolant contient des charges tel que le sable.

4. Procédé selon au moins l'une quelconque des revendications 1 à 3, caractérisé en ce que la consolidation du matériau isolant (3) est obtenue par déplacement de la seconde plaque (2) dans la direction de la première plaque (1).

5. Procédé selon au moins l'une quelconque des revendications 1 à 4, caractérisé en ce que la consolidation du matériau isolant (3) est réalisée par un outil de compression avec au moins une compression.

6. Procédé selon la revendication 5, caractérisé en ce que l'on opère avec un outil de compression décalé.

7. Procédé selon l'une quelconque des revendications 1 à 6, caractérisé en ce que, après la première consolidation, une autre quantité de matériau isolant (3) est déposée librement complètement ou dans des zones localement limitées sur la surface de la première plaque (1) et ensuite consolidée par application d'une pression.

8. Procédé selon l'une quelconque des revendications 1 à 7, caractérisé en ce que la consolidation du matériau isolant (3) est réalisée par endroits par un outil de compression pourvu d'évidements et/ou ensuite le matériau isolant (3) appliqué dans les zones non consolidées est éliminé.

9. Procédé selon l'une quelconque des revendications 1 à 8, caractérisé en ce que le matériau isolant non consolidé est soufflé ou aspiré ou encore éliminé par voie électrostatique.

10. Procédé selon l'une quelconque des revendications 1 à 9, caractérisé en ce que le matériau isolant (3) est déposé au moins lors de la première application via un dispositif d'avancement et d'acheminement approprié presque de manière homogène sur la première plaque (1).

11. Procédé selon l'une quelconque des revendications 1 à 10, caractérisé en ce que le matériau isolant (3) est déposé sous la forme d'un cône de déversement et est réparti par la seconde plaque (2) ou l'outil de compression, en partant de la pointe du cône de déversement (4), lors du déplacement de la seconde plaque (2) sur la première plaque (1), sur le matériau isolant (3).

12. Procédé selon l'une quelconque des revendications 1 à 11, caractérisé en ce que le cône de déversement (4) est formé dans la zone du centre de gravité de surface de la première plaque (1).

13. Procédé selon l'une quelconque des revendications 1 à 12, caractérisé en ce que la première plaque (1) est déformée au moins partiellement en réceptacle avant le dépôt du matériau isolant (3).

14. Procédé selon l'une quelconque des revendications 1 à 13, caractérisé en ce que la surface de la première plaque (1), qui forme la base du cône de déversement (4), est pourvue d'un agent liant inorganique avant l'application.

15. Procédé selon l'une quelconque des revendications 1 à 14, caractérisé en ce que la répartition et/ou la consolidation du matériau isolant (3) sont influencées de manière appropriée par des indentations (5), des moulures (6) et/ou des nervures dans ou sur au moins l'une des deux plaques (1, 2) ou un outil de compression utilisé pour la consolidation.

16. Procédé selon l'une quelconque des revendications 1 à 15, caractérisé en ce que la seconde plaque (2) est reliée à la première plaque (1) par bridage au moins partiel sur les bords.

17. Procédé selon l'une quelconque des revendications 1 à 16, caractérisé en ce que la force de compression de la seconde plaque (2) ou de l'outil de compression contre la première plaque (1) et le matériau isolant (3) sont réglées mutuellement avec la quantité de matériau isolant (3) de telle sorte que l'espace compris entre les deux plaques (1, 2) soit complètement rempli de matériau isolant.

18. Procédé selon l'une quelconque des revendications 1 à 17, caractérisé en ce que le bouclier thermique est déformé de manière tridimensionnelle après la liaison des deux plaques (1, 2).

19. Procédé selon la revendication 1, caractérisé en ce que des zones prédéterminées de la première plaque (1) sont chargées de courant électrostatiques avant le dépôt libre du matériau isolant (3) et le matériau isolant (3) est éliminé dans les zones non chargées avant la consolidation.

20. Procédé selon la revendication 1, caractérisé en ce que, après le dépôt libre du matériau isolant (3), le matériau isolant est éliminé de la première plaque (1) avant la consolidation par un outil chargé de charges électrostatiques par endroits.

21. Bouclier thermique fabriqué par un procédé selon au moins l'une quelconque des revendications 1 à 20, caractérisé en ce que du mica en poudre et/ou en lamelles est reçu en tant que matériau isolant (3) entre deux plaques (1, 2) reliées l'une à l'autre par engagement positif et/ou par adhérence et formées d'un matériau à déformation au moins partiellement plastique.

22. Bouclier thermique selon la revendication 21, caractérisé en ce qu'au moins l'une des deux plaques (1, 2) est constituée d'un métal.

23. Bouclier thermique selon la revendication 21 ou 22, caractérisé en ce qu'au moins l'une des plaques (1, 2) est pourvue d'indentations (5), de moulures (6) et/ou de nervures.

24. Bouclier thermique selon l'une quelconque des revendications 21 à 23, caractérisé en ce que la surface d'au moins l'une des deux plaques (1, 2) en contact avec le matériau isolant (3) présente une rugosité de surface élevée.

25. Bouclier thermique selon l'une quelconque des revendications 21 à 24, caractérisé en ce qu'au moins l'une des deux plaques (1, 2) est pourvue au moins sur une face d'une couche réfléchissant le rayonnement thermique.

26. Bouclier thermique selon l'une quelconque des revendications 21 à 25, caractérisé en ce que la plaque (1, 2) agencée sur la face du bouclier thermique opposée au rayonnement thermique est plus épaisses est pourvue de nervures et/ou est constituée d'un matériau ayant une bonne conductibilité thermique.

27. Bouclier thermique selon l'une quelconque des revendications 21 à 26, caractérisé en ce que l'épaisseur et/ou la consolidation du matériau isolant (3) reçu entre les plaques (1, 2) varient localement.

28. Bouclier thermique selon l'une quelconque des revendications 21 à 27, caractérisé en ce que des zones prédéterminées de matériau isolant (3) sont dégagées.
